# DEMANDE DE BREVET EUROPEEN

(11) **EP 3 716 170 A1**
(43) Date de publication de la demande: **30.09.2020**
(21) Numéro de dépôt: 20162488.9
(22) Date de dépôt: 11.03.2020
(51) Int. Cl.: G06Q 10/08, G06Q 50/28

(54) **SYSTEME INFORMATISÉ DE LIVRAISON DE COLIS ET PROCÉDÉ CORRESPONDANT**

(30) Priorité: 29.03.2019 FR 1903326
(71) Demandeur: Decayeaux, Antoine, 80210 Feuquieres en Vimeu (FR); Decayeux, Stéphane, 80100 Abbeville (FR)
(72) Inventeur: Decayeaux, Antoine, 80210 Feuquieres en Vimeu (FR); Decayeux, Stéphane, 80100 Abbeville (FR)
(74) Mandataire: Hirsch & Associés

(57) **Abrégé**

L'invention concerne un système informatisé et un procédé correspondant pour la livraison de colis dans un immeuble à accès contrôlé par une porte comprenant des moyens électroniques d'ouverture et de fermeture (2) commandables à distance et configurés pour ouvrir et fermer la porte sur réception d'un premier signal (21) d'ouverture ou de fermeture, et un dispositif de réception de colis comprenant une pluralité de casiers destinés à recevoir un ou plusieurs colis et chacun associé à une personne (A) donnée. Le système comprend des moyens informatiques de commande (4, 23), des moyens de transmission configurés pour transmettre un premier signal d'ouverture de la porte aux moyens d'ouverture et de fermeture (2), un dispositif informatique portable de livraison (6) destiné à être utilisé par un livreur (B),:des moyens de contrôle (7) permettant la saisie d'un code de livraison (C) à usage unique et pour contrôler la validité du code de livraison (C) et des moyens de transmission (8) configurés pour transmettre un deuxième signal (22) d'ouverture de porte aux moyens de commande (4, 23).

## Description

### Domaine Technique

La présente invention concerne un système informatisé de livraison de colis et procédé de livraison de colis correspondant. Elle trouve notamment une application à la livraison de colis dans un immeuble à accès contrôlé.

### Etat de la technique

La réception d'un colis est souvent problématique, notamment pour les personnes habitant dans un immeuble. En effet, cette livraison est généralement réalisée par un facteur durant les heures de bureau, si bien que le destinataire du colis est rarement à son domicile quand le facteur passe pour livrer le colis. Le facteur ne peut pas laisser le colis devant la porte du destinataire. Par suite, le facteur rapporte le colis à la poste où le destinataire doit se rendre pour le récupérer, dans un délai fixé.

Par ailleurs, il est connu des dispositifs de boîtes aux lettres collectives comprenant une pluralité de casiers adaptés à recevoir des lettres qui sont généralement disposés dans le hall des immeubles pour qu'un facteur puisse laisser le courrier destiné aux différents habitants de l'immeuble. Bien entendu, il n'est pas possible d'augmenter le volume de ces casiers pour permettre de recevoir des colis volumineux car l'espace disponible dans le hall est généralement réduit.

On connaît le dispositif décrit dans FR 2 975 273, qui permet de recevoir un colis de manière simple, même en cas d'absence lorsque le facteur vient livrer le colis.

Cependant, dans certains immeubles, il est nécessaire de pouvoir ouvrir la porte principale avant d'accéder au dispositif. La distribution de colis par un facteur ou un transporteur requiert donc que ce dernier puisse franchir cette porte. Or, les portes d'immeuble sont généralement pourvues d'un système de contrôle d'accès, qui nécessite une identification pour pouvoir ouvrir.

Par exemple, dans le cas d'un contrôle d'accès par saisie d'un code sur un dispositif appelé portier, on peut envisager que le transporteur dispose d'un code qui lui est propre. Or, le transporteur n'est pas toujours la même société, et l'employé de la société qui procède à la livraison n'est pas toujours le même. La gestion d'un tel système est donc peu fiable, et peu sécurisante dans la mesure où un code d'accès peu facilement être intercepté par une personne non autorisée, à moins de mettre en place au sein de chaque société de transport des mesures et des systèmes de sécurité appropriés pour sécuriser la gestion des codes d'accès à tous les immeubles. D'une manière générale, une telle solution est compliquée à mettre en œuvre et/ou très peu sécurisée.

Un des buts de l'invention est donc de résoudre notamment les problèmes précités. Ainsi, l'invention a notamment pour objectif de proposer un système et un procédé qui facilite la distribution de colis dans un immeuble à accès contrôlé, tout en garantissant un niveau de sécurité élevé en termes de contrôle d'accès.

### Résumé de l'invention

L'invention a ainsi pour objet, selon un premier aspect, un système informatisé de livraison de colis dans une zone à accès contrôlé par une porte (1), comprenant des moyens électroniques d'ouverture et de fermeture (2) commandables à distance et configurés pour ouvrir et fermer la porte (1) sur réception d'un premier signal (21) d'ouverture, respectivement de fermeture, et un dispositif de réception de colis (3) comprenant une pluralité de casiers (9) destinés notamment à recevoir un ou plusieurs colis et chacun associé à une personne (A) donnée,
système dans lequel d'une part le dispositif de réception de colis (3) comprend des moyens informatiques de commande (4, 23) et des moyens de transmission (5) commandés par les moyens de commande (4, 23) et configurés pour transmettre un premier signal (21) d'ouverture de la porte (1) aux moyens d'ouverture et de fermeture (2), et d'autre part en ce qu'il comprend un dispositif informatique portable de livraison (6) destiné à être utilisé par un livreur (B) et comprenant :
des moyens de contrôle (7) configurés pour permettre la saisie d'un code de livraison (C) à usage unique associé à un colis à livrer à une personne (A) donnée et pour contrôler la validité du code de livraison (C),
et des moyens de transmission (8) configurés pour transmettre un deuxième signal (22) d'ouverture de porte aux moyens de commande (4, 23),
de sorte que si un code de livraison (C) saisi sur le dispositif de livraison (6) est validé par les moyens de contrôle (7), un deuxième signal (22) d'ouverture de porte est envoyé par les moyens de transmission (8) du dispositif de livraison (6) aux moyens de commande (4, 23) pour commander les moyens de transmission (5) du dispositif de réception de colis (3) pour envoi aux moyens électroniques d'ouverture et de fermeture (2) d'un premier signal (21) d'ouverture de la porte (1).

Le dispositif informatique portable de livraison (6) destiné à être utilisé par un livreur (B). Suivant certains modes de réalisation, le système comprend en outre une ou plusieurs des caractéristiques suivantes, prise(s) isolément ou suivant toutes les combinaisons techniquement possibles :
- le dispositif portable de livraison comprend des moyens de réception d'un identifiant de porte, et en ce qu'il comprend d'une part des moyens de génération d'un code de livraison (C) à usage unique associé à un colis à livrer à une personne donnée (A), et d'autre part une base de données dans laquelle sont stockés des identifiants de porte associés à des listes de personnes, et pour chacune des personnes desdites listes de personnes, pour laquelle un code de livraison (C) a été généré par les moyens de génération, le code de livraison (C) correspondant;
- les moyens de contrôle sont configurés pour, après réception d'un identifiant de porte donné par les moyens de réception, vérifier dans la base de données si un code de livraison (C) saisi sur le dispositif de livraison est associé à une personne (A) identifiée sur une liste de personnes associée à l'identifiant de porte ;
- le système comprend des moyens d'affichage d'un identifiant de porte, disposés sur ou à proximité de la porte ;
- les moyens de réception comprennent des moyens de lecture d'un identifiant de porte affiché sur les moyens d'affichage ;
- le système comprend des moyens d'émission d'un identifiant de porte, disposé sur ou à proximité de la porte, et en ce que les moyens de réception sont configurés pour réceptionner un identifiant de porte émis par les moyens d'émission ;
- le dispositif de livraison comprend des moyens de demande d'autorisation configurés pour, après validation d'un code de livraison (C) par les moyens de contrôle, contacter la personne (A) associée dans la base de données audit code de livraison (C) pour demander une autorisation d'ouverture de la porte, et en ce que les moyens de transmission du dispositif de livraison sont configurés pour transmettre le deuxième signal d'ouverture de porte aux moyens de commande uniquement si une autorisation d'ouverture de porte est reçue par les moyens de demande d'autorisation.

L'invention a également pour objet, selon un deuxième aspect, un procédé informatisé de livraison de colis dans une zone à accès contrôlé par une porte, au moyen d'un système comprenant :
- une étape de saisi d'un code de livraison (C) et de validation du code de livraison (C) par les moyens de contrôle du dispositif de livraison,
- une étape de transmission d'un deuxième signal d'ouverture de porte, par les moyens de transmission du dispositif de livraison, aux moyens de commande du dispositif de réception de colis,
- une étape de transmission, par les moyens de transmission du dispositif de réception de colis et sur commande des moyens de commande d'un premier signal d'ouverture de porte aux moyens électroniques d'ouverture et de fermeture,
- une étape d'ouverture de la porte par les moyens électroniques d'ouverture et de fermeture, sur réception du premier signal d'ouverture de porte.

Suivant certains modes de mise en œuvre, le procédé comprend en outre une ou plusieurs des caractéristiques suivantes, prise(s) isolément ou suivant toutes les combinaisons techniquement possibles :
- une étape de réception d'un identifiant de porte par les moyens de réception du dispositif de livraison ;
- une étape de génération d'un code de livraison (C) à usage unique associé à un colis à livrer à une personne (A) donnée par les moyens de génération,
- une étape d'enregistrement dans la base de données du code de livraison (C) généré par les moyens de génération associé à la personne (A) donnée dans la liste de personnes correspondant à un identifiant de porte,
- une étape de vérification, par moyens de contrôle, dans la base de données pour vérifier, après réception d'un identifiant de porte donné par les moyens de réception, si un code de livraison (C) saisi sur le dispositif de livraison est associé à une personne (A) identifiée sur une liste de personnes associée à l'identifiant de porte,
- une étape d'affichage par les moyens d'affichage d'un identifiant de porte, disposés sur ou à proximité de la porte,
- une étape de lecture, par les moyens de lecture, d'un identifiant de porte affiché sur les moyens d'affichage,
- une étape d'émission, par les moyens d'émission disposés sur ou à proximité de la porte, d'un identifiant de porte, et une étape de réception, par les moyens de réception, d'un identifiant de porte émis par les moyens d'émission,
- une étape de demande d'autorisation, par les moyens de demande d'autorisation, après validation d'un code de livraison (C) par les moyens de contrôle, pour contacter la personne (A) associée dans la base de données audit code de livraison (C) afin de demander une autorisation d'ouverture de la porte, et
- l'étape de transmission par les moyens de transmission du dispositif de livraison du deuxième signal d'ouverture de porte aux moyens de commande est réalisée uniquement si une autorisation d'ouverture de porte est reçue par les moyens de demande d'autorisation.

Ainsi, le système et le procédé de l'invention permettent à un transporteur de livrer un colis simplement, dans un immeuble à accès contrôlé, tout en maintenant un niveau de sécurité élevé concernant le contrôle d'accès, grâce au mécanisme de code à usage unique associé à un colis.

### Brève description des figures

Les caractéristiques et avantages de l'invention apparaitront à la lecture de la description qui va suivre, donnée uniquement à titre d'exemple, et non limitative, en référence aux figures annexées suivantes :
- [FIG. 1] :: représentation schématique d'un exemple de système selon l'invention ; et
- [FIG. 2] :: représentation schématique et fonctionnelle de l'exemple de la figure 1.

### Description des modes de réalisation

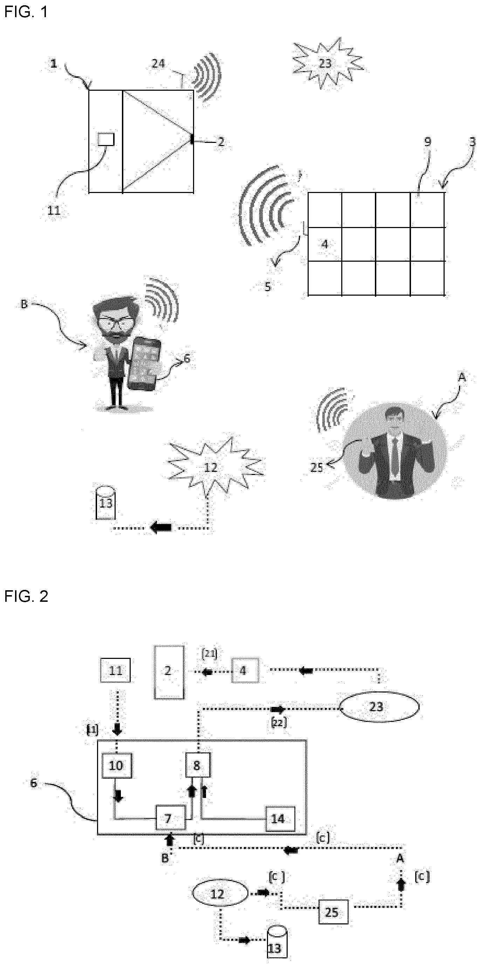

Dans l'exemple représenté sur les figures 1 et 2, il est donc question d'un système informatisé de livraison de colis dans une zone à accès contrôlé par une porte 1. Il s'agit typiquement de la porte 1 d'entrée dans un immeuble d'habitation dans lequel résident plusieurs personnes A.

De façon classique, après franchissement de cette porte 1, on trouve un dispositif de réception de colis 3, par exemple de type boîtes aux lettres permettant de réceptionner à la fois les colis et les courriers destinés à chaque résidents A. Le dispositif de réception de colis 3 comprend ainsi plusieurs casiers 9, chacun associé à un résident A donné, et permettant notamment de recevoir le ou les colis destinés à ce résident A donné. Bien entendu, il est également possible que le dispositif de réception de colis soit mutualisé, donc serve à plusieurs ou à tous les résidents.

Le système comprend des moyens électroniques d'ouverture et de fermeture 2 de la porte 1, commandables à distance. Ces moyens d'ouverture et de fermeture 2 sont configurés pour permettre d'ouvrir et de fermer la porte 1 sur réception d'un premier signal 21 d'ouverture, respectivement de fermeture.

Par exemple, sur réception du premier signal d'ouverture 21, les moyens d'ouverture et de fermeture 2 déclenchent un contacteur situé dans la porte 1 pour permettre son ouverture. Le dispositif de réception de colis 3 comprend d'une par des moyens informatiques de commande 4, 23, et d'autre part des moyens de transmission 5, comprenant par exemple une antenne 5 de transmission radio ou des moyens de transmission filaire, commandés par les moyens de commande 4, 23.

Ces moyens informatiques de commande 4, 23 comprennent des moyens électroniques de commande, par exemple logés dans l'un des casiers 9 du dispositif de réception de colis 3, connectés à un système informatique 23 qui peut être distant.

Les moyens électroniques de commande peuvent par exemple être configurés pour mettre à jour des étiquettes électroniques portées par chaque casier 9 et sur lesquelles figures les noms des résidents A correspondants, sur réception des informations à mettre à jour de la part du système informatique 23.

Les moyens de transmission 5 sont configurés pour transmettre un premier signal 21 d'ouverture de la porte 1 aux moyens d'ouverture et de fermeture 2.

Par ailleurs, le système comprend un dispositif informatique portable de livraison 6, tel qu'un téléphone portable ou une tablette, destiné à être utilisé par un livreur de colis B. Ce dispositif de livraison 6 comprend d'une part des moyens de contrôle 7, et d'autre part des moyens de transmission 8.

Les moyens de contrôle 7 sont configurés pour permettre la saisie d'un code de livraison C à usage unique, par le livreur B, associé à un colis à livrer à une personne A donnée. Ils sont également configurés pour contrôler la validité du code de livraison C saisi.

Les moyens de transmission 8 sont configurés pour transmettre un deuxième signal 22 d'ouverture de porte aux moyens de commande 4, 23, sur validation du code C saisi sur, et contrôlé par, les moyens de contrôle 7.

Ainsi, le livreur B saisi un code C sur le dispositif de livraison 6, qui est contrôlé par les moyens de contrôle 7. Les moyens de contrôle 7 vérifient la validité du code de livraison C saisi par le livreur B. Si le code C est valide, les moyens de contrôle 7 commande les moyens de transmission 8 du dispositif de livraison 6, pour transmission par ces derniers d'un deuxième signal 22 d'ouverture de porte aux moyens de commande 4, 23. Les moyens de commande 4, 23 commandent alors la transmission par les moyens de transmission 5 du dispositif de réception de colis 3, d'un premier signal 21 d'ouverture de porte aux moyens électroniques d'ouverture et de fermeture (2), afin d'obtenir l'ouverture de la porte 1.

Il est prévu, dans le dispositif portable de livraison 6, des moyens de réception 10 d'un identifiant de porte 11.

On prévoit également des moyens d'affichage de cet identifiant 11 de la porte 1, sur ou à proximité de la porte 1. Pour simplifier la figure 1, ces moyens d'affichage portent la même référence 11 que l'identifiant de porte 11. Il peut s'agir d'une étiquette portant un code-barre, ou un QR-code, ou d'un écran digital affichant ce code.

Les moyens de réception 10 du dispositif de livraison 6 comprennent quant à eux des moyens de lecture 10 d'un identifiant de porte 11 affiché sur les moyens d'affichage 11, par exemple des moyens permettant de scanner l'identifiant de porte 11 sous la forme d'un code-barre, ou un QR-code code.

Alternativement, ou en combinaison, le dispositif d'ouverture et de fermeture 2 peut comprendre des moyens d'émission de l'identifiant de porte 11, par l'intermédiaire de moyens de transmission 24 de préférence non filaire.

Les moyens de réception 10 du dispositif portable de livraison 6 sont alors en outre configurés pour recevoir l'identifiant de porte 11 de la part des moyens de transmission 24 du dispositif d'ouverture et de fermeture 2.

Ces moyens de transmission 24 sont alors également des moyens de réception 24 du premier signal 21 d'ouverture de porte. Sinon, lorsque la mise à disposition de l'identifiant de porte 11 se fait uniquement par des moyens d'affichage 11 tel qu'expliqué plus haut, les moyens 24 peuvent être uniquement des moyens de réception 24.

Le système de l'invention comprend en outre, et d'une part, des moyens de génération 12 d'un code de livraison C, et d'autre part une base de données 13.

Le code de livraison C généré par les moyens de génération 12 est un code à usage unique, associé à un colis à livrer à une personne donnée A. Les moyens de génération font partie d'un système informatique 12 distant, avec lequel le dispositif portable de livraison 6 du livreur B, et comme on le verra plus loin un dispositif portable 25 de la personne donnée A, communiquent.

Dans la base de données 13, connectée aux moyens de génération 12, sont stockés des identifiants de porte 11 associés à des listes de personnes, qui correspondent à des listes de résidents A de plusieurs immeubles. Pour chacune des personnes A de ces listes de personnes, pour laquelle un code de livraison C a été généré par les moyens de génération 12, ce code de livraison C à usage unique est également stocké dans la base de données 13 en association avec la personne A correspondante.

Les moyens de contrôle 7 du dispositif portable de livraison 6 sont configurés pour, après réception d'un identifiant de porte 11 par les moyens de réception 10, vérifier dans la base de données 13, par l'intermédiaire du système informatique 12, si un code de livraison C préalablement saisi sur le dispositif de livraison 6 par le livreur B, est associé dans cette base de données 13 à une personne A identifiée sur une liste de personnes associée à l'identifiant de porte 11 en question.

On peut prévoir que l'ouverture de la porte 1 est obtenue directement, après validation du code C sur le dispositif de livraison portable, ou indirectement, sur intervention de la personne A, après validation de ce code C.

Ainsi, pour une ouverture de la porte 1 après validation du code C, mais sur intervention de la personne A, on prévoit que dispositif de livraison 6 comprend des moyens de demande d'autorisation 14. Ces moyens de demande d'autorisation 14 sont configurés pour, après validation d'un code de livraison C par les moyens de contrôle 7 du dispositif de livraison 6, contacter la personne A associée dans la base de données 13 à ce code de livraison C, pour demander une autorisation d'ouverture de la porte 1. Les moyens de transmission 8 du dispositif de livraison 6 sont alors configurés pour transmettre le deuxième signal 22 d'ouverture de porte aux moyens de commande 4, 23 uniquement si une autorisation d'ouverture de porte 1 est reçue, de la part de la personne A contactée, par les moyens de demande d'autorisation 14.

La personne A utilise un dispositif informatique 25, portable ou non, tel qu'un téléphone portable, une tablette ou un ordinateur classique, comprenant des moyens d'autorisation, pour ainsi transmettre son autorisation via les moyens d'autorisation.

La personne A est aussi en communication, par l'intermédiaire de son dispositif informatique 25 avec le système informatique 12, donc les moyens de génération 12 du code C à usage unique.

Ce dispositif informatique 25 comprend en effet également des moyens de demande de génération d'un code C à usage unique.

Ainsi, et par exemple, lors d'un achat sur internet et avant de finaliser cet achat, la personne A demande via les moyens de demande de génération de code C à usage unique de son dispositif informatique 25, la génération d'un tel code C aux moyens de génération 12 du système informatique 12.

Comme on l'a vu plus haut, ce code C sera associé dans la base de données 13 à la personne A, dans la liste de personnes résidente dans son immeuble, liste par ailleurs identifiée par l'identifiant de porte 11 correspondant.

Pour finaliser son achat sur le site d'achat, la personne A fournit le code de livraison C à usage unique qu'elle vient de recevoir sur son dispositif informatique 25 de la part du système informatique 12, en même temps que les informations de livraison (adresse, etc...). Le livreur B reçoit donc, pour mettre en oeuvre la livraison, l'adresse de livraison et le code de livraison C à usage unique, pour mettre en oeuvre le procédé de livraison tel qu'expliqué ci-dessus.

Il est précisé que par code C à usage unique, on entend que le code C ne peut plus être utilisé après mise en œuvre complète du processus de livraison correspondant. Plusieurs solutions peuvent être mise en œuvre pour atteindre ce but. On peut par exemple prévoir un marqueur dans la base de données 13, renseigné une fois que la livraison est terminée, qui indique que ce code n'est plus valide. Dans ce cas, la vérification de la validité du code C implique de vérifier la présence du code C et l'information du marqueur de validité dans la base de données 13. On peut prévoir également un effacement du code C dans la base de données 13 une fois le processus de livraison terminé.

La fin du processus de livraison peut être signalée par le livreur B et/ou la personne livrée A, via le dispositif de livraison portable, respectivement le dispositif informatique 25. Elle peut être également déterminée automatiquement lors de la validation du code C lui-même. Selon un mode de réalisation particulier, le dispositif de livraison portable peut être associé à des moyens de communication comportant des moyens de contrôle d'accès comprenant une base de données sous la forme d'une interface d'affichage et/ou de saisie de valeurs de certains champs de cette base de données. Dans cette base de données peuvent alors être stockés les identifiants IDU des utilisateurs en association avec des autorisations d'ouverture de porte. Les moyens de contrôle d'accès sont configurés pour recevoir un identifiant d'utilisateur IDU et un identifiant de porte pour vérifier s'il existe pour l'utilisateur identifié, reçu-dans la base de données, une autorisation d'ouverture de porte, correspondant à la porte identifiée.

S'il existe une telle autorisation dans la base de données, les moyens de contrôle d'accès envoient le code d'ouverture de porte au dispositif d'ouverture et de fermeture, par l'intermédiaire d'un dispositif utilisateur portable destiné à être porté et utilisé par l'utilisateur et identifié par l'identifiant d'utilisateur IDU, le dispositif utilisateur (13, 14) pouvant être un téléphone portable identifié par son code IMEI, ce code IMEI jouant alors le rôle d'identifiant utilisateur.

Une fois la porte 1 franchie, le livreur B accède au dispositif de livraison 3, et peut mettre en œuvre classiquement la fin du processus de livraison, par exemple en saisissant le code de livraison C sur une interface prévue au niveau des moyens électroniques de commande 4. On prévoit en effet que le code C à usage unique est préalablement transmis au système informatique 23 du dispositif de livraison 3, par les système informatique 12, de sorte que lorsque le livreur B saisit ce code de livraison C sur l'interface en question, le casier 9 correspondant à la personne A est ouvert automatiquement par les moyens électroniques de commande 4.

Dans ce cas, la fin du processus de livraison peut aussi être déterminée automatiquement par le système informatique 23 du dispositif de livraison 3, au moment de la saisi du code C par le livreur A sur l'interface.

Selon un mode de réalisation particulier de l'invention, les moyens commandables à distance et configurés pour actionner, donc ouvrir et fermer la porte (1) pourraient être actionnés par réception d'un premier signal d'ouverture ou de fermeture émis à partir d'un téléphone portable.

Selon ce mode de réalisation particulier, le dispositif de livraison portable 6 peut être associé à des moyens de communication comportant des moyens de contrôle d'accès et comprenant une base de données sous la forme d'une interface d'affichage et/ou de saisie de valeurs de certains champs de cette base de données. Dans la base de données sont stockés les identifiants IDU des utilisateurs en association avec des autorisations d'ouverture de porte. Les moyens de contrôle d'accès sont configurés pour recevoir un identifiant d'utilisateur IDU et un identifiant de porte pour vérifier s'il existe pour l'utilisateur identifié, reçu-dans la base de données, une autorisation d'ouverture de porte, correspondant à la porte identifiée.

S'il existe une telle autorisation dans la base de données, les moyens de contrôle d'accès envoient le code d'ouverture de porte au dispositif d'ouverture et de fermeture, par l'intermédiaire d'un dispositif utilisateur portable.

Ce dispositif utilisateur portable destiné à être porté et utilisé par l'utilisateur est identifié par l'identifiant d'utilisateur IDU, le dispositif utilisateur pouvant être un téléphone portable identifié par son code IMEI, ce code IMEI jouant alors le rôle d'identifiant utilisateur. Un tel dispositif portable et son utilisation sont décrits et revendiqués dans une demande de brevet déposée le même jour que la présente demande et ayant pour titre : « Dispositif d'ouverture et de fermeture de porte avec contrôle d'accès, système intégrant un tel dispositif et procédé correspondant ».

La présente description est donnée à titre d'exemple et n'est pas limitative de l'invention.

## Revendications

1. Système informatisé de livraison de colis dans une zone à accès contrôlé par une porte (1), comprenant des moyens électroniques d'ouverture et de fermeture (2) commandables à distance et configurés pour ouvrir et fermer la porte (1) sur réception d'un premier signal (21) d'ouverture, respectivement de fermeture, et un dispositif de réception de colis (3) comprenant une pluralité de casiers (9) destinés notamment à recevoir un ou plusieurs colis et chacun associé à une personne (A) donnée,
caractérisé d'une part en ce que le dispositif de réception de colis (3) comprend des moyens informatiques de commande (4, 23) et des moyens de transmission (5) commandés par les moyens de commande (4, 23) et configurés pour transmettre un premier signal (21) d'ouverture de la porte (1) aux moyens d'ouverture et de fermeture (2), et d'autre part en ce qu'il comprend un dispositif informatique portable de livraison (6) destiné à être utilisé par un livreur (B) et comprenant :
des moyens de contrôle (7) configurés pour permettre la saisie d'un code de livraison (C) à usage unique associé à un colis à livrer à une personne (A) donnée et pour contrôler la validité du code de livraison (C),
et des moyens de transmission (8) configurés pour transmettre un deuxième signal (22) d'ouverture de porte aux moyens de commande (4, 23),
de sorte que si un code de livraison (C) saisi sur le dispositif de livraison (6) est validé par les moyens de contrôle (7), un deuxième signal (22) d'ouverture de porte est envoyé par les moyens de transmission (8) du dispositif de livraison (6) aux moyens de commande (4, 23) pour commander les moyens de transmission (5) du dispositif de réception de colis (3) pour envoi aux moyens électroniques d'ouverture et de fermeture (2) d'un premier signal (21) d'ouverture de la porte (1).

2. Système selon la revendication 1, **caractérisé en ce que** le dispositif portable de livraison (6) comprend des moyens de réception (10) d'un identifiant de porte (11), et **en ce qu'**il comprend d'une part des moyens de génération (12) d'un code de livraison (C) à usage unique associé à un colis à livrer à une personne donnée (A), et d'autre part une base de données (13) dans laquelle sont stockés des identifiants de porte (11) associés à des listes de personnes, et pour chacune des personnes desdites listes de personnes, pour laquelle un code de livraison (C) a été généré par les moyens de génération (12), le code de livraison (C) correspondant.

3. Système selon la revendication 2, **caractérisé en ce que** les moyens de contrôle (7) sont configurés pour, après réception d'un identifiant de porte (11) donné par les moyens de réception (10), vérifier dans la base de données (13) si un code de livraison (C) saisi sur le dispositif de livraison (6) est associé à une personne (A) identifiée sur une liste de personnes associée à l'identifiant de porte (11).

4. Système selon l'une quelconque des revendications 2 et 3, **caractérisé en ce qu'**il comprend des moyens d'affichage (11) d'un identifiant de porte (11), disposés sur ou à proximité de la porte (1), et **en ce que** les moyens de réception (10) comprennent des moyens de lecture (10) d'un identifiant de porte (11) affiché sur les moyens d'affichage (11).

5. Système selon l'une quelconque des revendications 2 à 4, **caractérisé en ce qu'**il comprend des moyens d'émission d'un identifiant de porte (11), disposé sur ou à proximité de la porte (1), et **en ce que** les moyens de réception (10) sont configurés pour réceptionner un identifiant de porte (11) émis par les moyens d'émission.

6. Système selon l'une quelconque des revendications 2 à 5, **caractérisé en ce que** le dispositif de livraison (6) comprend des moyens de demande d'autorisation (14) configurés pour, après validation d'un code de livraison (C) par les moyens de contrôle (7), contacter la personne (A) associée dans la base de données (13) audit code de livraison (C) pour demander une autorisation d'ouverture de la porte (1), et **en ce que** les moyens de transmission (8) du dispositif de livraison (6) sont configurés pour transmettre le deuxième signal (22) d'ouverture de porte aux moyens de commande (4, 23) uniquement si une autorisation d'ouverture de porte (1) est reçue par les moyens de demande d'autorisation (14).

7. Système selon l'une quelconque des revendications 1 à 6, **caractérisé en ce que** les moyens commandables à distance et configurés pour actionner, donc ouvrir et fermer la porte (1) pourraient être actionnés par réception d'un premier signal d'ouverture ou de fermeture émis à partir d'un téléphone portable.

8. Système selon l'une quelconque des revendications 1 à 7, **caractérisé en ce que** le dispositif de livraison portable 6 peut être associé à des moyens de communication comportant des moyens de contrôle d'accès et comprenant une base de données sous la forme d'une interface d'affichage et/ou de saisie de valeurs de certains champs de cette base de données.

9. Système selon la revendication 8, **caractérisé en ce que** dans la base de données sont stockés les identifiants IDU des utilisateurs en association avec des autorisations d'ouverture de porte, les moyens de contrôle d'accès étant configurés pour recevoir un identifiant d'utilisateur IDU et un identifiant de porte pour vérifier s'il existe pour l'utilisateur identifié, reçu-dans la base de données, une autorisation d'ouverture de porte, correspondant à la porte identifiée.

10. Procédé informatisé de livraison de colis dans une zone à accès contrôlé par une porte (1), au moyen d'un système selon l'une quelconque des revendications précédentes, comprenant une étape de saisi d'un code de livraison (C) et de validation du code de livraison (C) par les moyens de contrôle (7) du dispositif de livraison (6); une étape de transmission d'un deuxième signal (22) d'ouverture de porte, par les moyens de transmission (8) du dispositif de livraison (6), aux moyens de commande (4, 23) du dispositif de réception de colis (3); une étape de transmission, par les moyens de transmission (5) du dispositif de réception de colis (3) et sur commande des moyens de commande (4, 23), d'un premier signal (21) ; une étape d'ouverture de la porte (1) par les moyens électroniques d'ouverture et de fermeture (2), sur réception du premier signal (21) d'ouverture de porte.

11. Procédé selon la revendication (10), **caractérisé en ce qu'**il comprend une étape de réception d'un identifiant de porte (11) par les moyens de réception (10) du dispositif de livraison (6), une étape de génération d'un code de livraison (C) à usage unique associé à un colis à livrer à une personne (A) donnée par les moyens de génération (12), et une étape d'enregistrement dans la base de données (13) du code de livraison (C) généré par les moyens de génération (12) associé à la personne (A) donnée dans la liste de personnes correspondant à un identifiant de porte (11).

12. Procédé selon la revendication 11, **caractérisé en ce qu'**i comprend une étape de vérification, par moyens de contrôle (7), dans la base de données (13) pour vérifier, après réception d'un identifiant de porte (11) donné par les moyens de réception (10), si un code de livraison (C) saisi sur le dispositif de livraison (6) est associé à une personne (A) identifiée sur une liste de personnes associée à l'identifiant de porte (11).

13. Procédé selon l'une quelconque des revendications 11 et 12, **caractérisé en ce qu'**il comprend une étape d'affichage par les moyens d'affichage (11) d'un identifiant de porte (11), disposés sur ou à proximité de la porte (1), et une étape de lecture, par les moyens de lecture (10), d'un identifiant de porte (11) affiché sur les moyens d'affichage (11).

14. Procédé selon l'une quelconque des revendications 11 à 13, **caractérisé en ce qu'**il comprend une étape d'émission, par les moyens d'émission disposés sur ou à proximité de la porte (1), d'un identifiant de porte (11), et une étape de réception, par les moyens de réception (10), d'un identifiant de porte (11) émis par les moyens d'émission.

15. Procédé selon l'une quelconque des revendications 11 à 14, **caractérisé en ce qu'**il comprend une étape de demande d'autorisation, par les moyens de demande d'autorisation (14), après validation d'un code de livraison (C) par les moyens de contrôle (7), pour contacter la personne (A) associée dans la base de données (13) audit code de livraison (C) afin de demander une autorisation d'ouverture de la porte (1), et **en ce que** l'étape de transmission par les moyens de transmission (8) du dispositif de livraison (6) du deuxième signal (22) d'ouverture de porte aux moyens de commande (4, 23) est réalisée uniquement si une autorisation d'ouverture de porte (1) est reçue par les moyens de demande d'autorisation (14).
